# EUROPÄISCHE PATENTANMELDUNG

(11) **EP 1 180 455 A2**
(43) Veröffentlichungstag der Anmeldung: **20.02.2002**
(21) Anmeldenummer: 01119524.5
(22) Anmeldetag: 14.08.2001
(51) Int. Cl.: B60R 16/02, H02J 1/02

(54) **Spannungsversorgung für eine Sensoreinheit**

(30) Priorität: 16.08.2000 DE 10039949
(71) Anmelder: SIEMENS AKTIENGESELLSCHAFT, 80333 München (DE)
(72) Erfinder: Mader, Gerhard, Dr., 93107 Thalmassing (DE)

(57) **Zusammenfassung**

Eine mit einer internen Schaltfrequenz arbeitende Spannungsversorgungseinheit (10) mit einem parallel zu ihrem Ausgang (16) geschalteten Kondensator (18) ist mit dem Eingang einer mit einer internen Schaltfrequenz arbeitende Sensoreinheit (14) verbunden. Die Verbindungsleitung (12) enthält einen Widerstand (28), der zusammen mit einem parallel zum Eingang geschalteten Kondensator (22) ein Filter bildet.

## Beschreibung

Die Erfindung betrifft eine Spannungsversorgung für eine Sensoreinheit, insbesondere eine Beschleunigungssensoreinheit in einem Insassenschutzsystem eines Kraftfahrzeugs gemäß dem Oberbegriff des Anspruchs 1.

Figur 6 zeigt eine bekannte Spannungsversorgung. Eine mit einer internen Schaltfrequenz arbeitende Spannungsversorgungseinheit 10 ist über eine Leitung 12 mit einer Sensoreinheit 14 verbunden. Die Sensoreinheit 14 enthält beispielsweise einen Beschleunigungssensor, wie er in Insassenschutzsystemen von Kraftfahrzeugen eingesetzt wird. Solche Beschleunigungssensoren arbeiten üblicherweise mit einem Filter mit geschalteter Kapazität (Switched Capacitor Filter; nicht dargestellt) und sind empfindlich für Spannungsschwankungen, insbesondere dann, wenn ihre Schaltfrequenz mit der Schaltfrequenz der Spannungsversorgungseinheit oder einem Vielfachen davon übereinstimmt. Grundsätzlich besteht eine Gefahr immer dann, wenn die Schaltfrequenz der Sensoreinheit oder ein ganzzahliges Vielfaches davon mit der Schaltfrequenz der Spannungsversorgungseinheit oder einem ganzzahligen Vielfachen davon übereinstimmt.

Ursachen für Schwankungen der am Ausgang der Spannungsversorgungseinheit 10 liegenden Versorgungsspannung sind beispielsweise:
1) periodische Spannungsschwankungen im Rhythmus der Schaltfrequenz;
2) Rauschen (random noise);
3) kurze Schaltspitzen.

Insbesondere die periodischen Störungen sind für den Sensor kritisch. Rauschen ist an keine bestimmte Frequenz gebunden und die Schaltspitzen können durch einen einfachen Keramikkondensator unmittelbar am Eingang der Sensoreinheit abgeblockt werden.

Wenn die Sensoreinheit auf Spannungsschwankungen reagiert, kann dies am Sensorausgang zu fehlerhaften Signalen führen, die wiederum folgende Probleme verursachen können:
a) ein routinemäßig ablaufender Sensortest meldet Fehler;
b) es wird ein Crash Algorithmus getriggert;
c) das Beschleunigungssignal, das der Sensor misst, wird durch Störungen verfälscht.

Um die Problemart c) zu beseitigen, wird die über die Leitung 12 übertragene Spannung derart gefiltert, daß die durch Spannungsschwankungen bedingten Verfälschungen des Sensorausgangssignals ein akzeptables Maß nicht überschreiten. Durch eine solche Filterung sind die Probleme a) und b) ebenfalls beseitigt.

Zum Zweck der Filterung liegt parallel zum Ausgang 16 der Spannungsversorgungseinheit 10 (Fig. 6), deren Ausgangsspannung typischerweise 5 V beträgt, neben ggf. weiteren Bauteilen, ein Glättungskondensator 18 mit typischerweise 10 bis 100 µF. Vor dem Abzweigpunkt des Glättungskondensators liegt typischerweise eine nicht dargestellte Drosselspule. Parallel zum Stromversorgungseingang 20 der Sensoreinheit 14 liegt ein Kondensator 22, der aus Gründen der elektromagnetischen Verträglichkeit vorhanden ist und zusätzlich vom Glättungskondensator 18 nicht unterdrückte Schaltspitzen im Frequenzbereich von etwa 100 kHz bis einige MHz weiter abgebaut. Der Kondensator 22 hat typischerweise eine Kapazität von 10 bis 100 nF. Weiter ist, insbesondere zur Unterdrückung der periodischen Spannungsschwankungen, die im Rhythmus der Schaltfrequenz der Spannungseinheit 10 auftreten, ein LC Filter mit einer Spule 24 und einem Kondensator 26 vorgesehen. Die Induktivität der Spule liegt typischerweise zwischen 10 und 100 µH; die Kapazität des Kondensators beträgt beispielsweise zwischen 10 und 100 µF. Mit der Schaltung gemäß Figur 6 wird bei einer Schaltfrequenz in der Spannungsversorgungseinheit 10 im Bereich von 100 kHz und Schaltfrequenzen im Beschleunigungssensor 14 im Bereich von 70 kHz am Eingang 20 der Sensoreinheit 14 eine Spannungskonstanz erzeugt, die die Funktionssicherheit der Sensoreinheit 14 sicherstellt.

Die Kondensatoren 18 und 26 sind wegen ihrer großen Kapazitäten typischerweise Tantal-Kondensatoren. Der Kondensator 22 ist wegen des HF-Verhaltens typischerweise ein Keramikkondensator.

Ein Problem der Schaltung gemäß Figur 6 liegt darin, dass sie wegen der LC-Filterung verhältnismäßig aufwendig ist.

Der Erfindung liegt die Aufgabe zugrunde, eine gattungsgemäße Spannungsversorgung zu schaffen, die bei hoher Funktionssicherheit mit geringem Aufwand und kostengünstig herstellbar ist.

Diese Aufgabe wird mit den Merkmalen des Hauptanspruchs gelöst.

Überraschenderweise hat sich herausgestellt, dass das aufwendige, anhand der Figur 5 beschriebene LC-Filter durch einen einfachen Ohm'schen Widerstand ersetzt werden kann, ohne dass die Gefahr besteht, dass am Eingang der Sensoreinheit 14 unzulässig hohe Spannungsschwankungen auftreten, die die fehlerfreie Funktion der Sensoreinheit 14 gefährden könnten. Die Kapazität des Filterkondensators muß erforderlichenfalls gegenüber der des im Stand der Technik eingesetzten Kondensators vergrößert werden, was auch dadurch geschehen kann, daß mehrere Kondensatoren parallel geschaltet werden, z.B. 3 mal 470 nF.

Der Anspruch 2 ist auf eine vorteilhafte Weiterbildung der erfindungsgemäßen Spannungsversorgung gerichtet, wobei gemäß Anspruch 3 das Filter nur einen Widerstand haben kann.

Die Ansprüche 4 und 5 kennzeichnen weitere vorteilhafte Einzelheiten. Gemäß dem Anspruch 6 läßt sich die gefilterte Spannung vorteilhaft als Referenzspannung für einen Mikrocontroller verwenden, der gemäß dem Anspruch 7 zur Wandlung der Ausgangssignale der Sensoreinheit(en) dient.

Die Erfindung kann überall dort mit Vorteil eingesetzt werden, wo Eigenfrequenzen einer Spannungsversorgungseinheit, die zu Spannungsschwankungen führen, sich mit Eigenfrequenzen einer Sensoreinheit in ungünstiger Weise (Harmonische) überlagern.

Die Erfindung wird im Folgenden anhand schematischer Zeichnungen beispielsweise und mit weiteren Einzelheiten erläutert.

Es stellen dar:
- Figur 1: ein Blockschaltbild einer erfindungsgemäßen Spannungsversorgung,
- Figuren 2 und 3: Signalverläufe zur Erläuterung der Funktion der Spannungsversorgung gemäß Figur 1,
- Figur 4 und 5: Blockschaltbilder zweier abgeänderter Ausführungsformen von Schaltungen und
- Figur 6: die bereits erläuterte Spannungsversorgung gemäß dem Stand der Technik.

In der nachfolgenden Beschreibung werden für funktionsähnliche oder funktionsgleiche Bauteile die gleichen Bezugszeichen wie in Figur 6 verwendet.

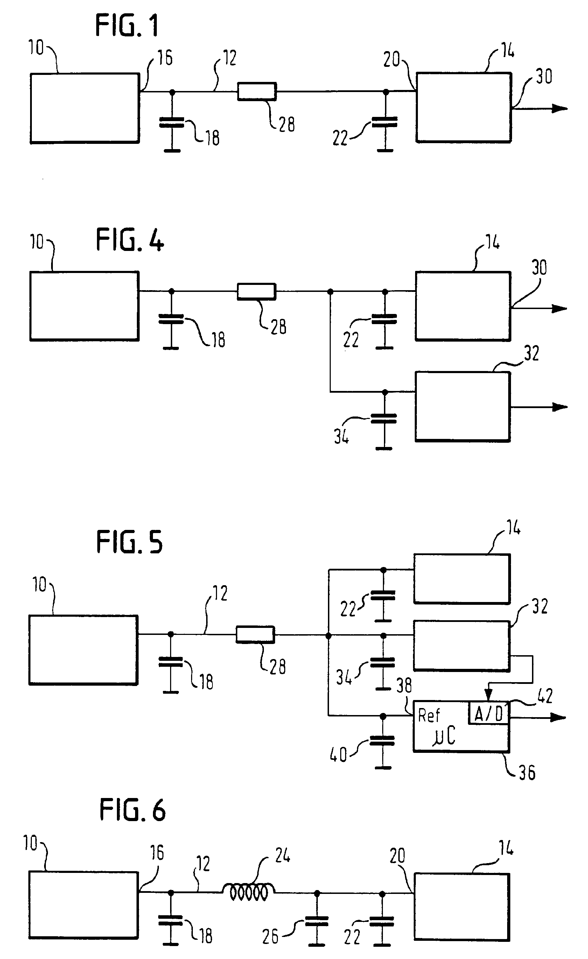

Die Schaltung der Figur 1 unterscheidet sich von der der Figur 6 dadurch, dass das LC-Filter (24, 26) der Figur 6 durch einen einfachen Ohm'schen Widerstand 28 ersetzt ist. Dieser Widerstand beträgt beispielsweise bei einer Ausgangspannung der Spannungsversorgungseinheit 10 von 5 V und für die Schaltfrequenzen sowie Größen der Kondensatoren 18 und 22, wie vorstehend anhand Fig. 6 beschrieben, etwa 10 Ohm. Überraschenderweise hat sich herausgestellt, dass mit diesem einfachen Filter, bei dem der Widerstand 28 mit dem ohnehin aus Gründen der elektromagnetischen Verträglichkeit vorhandenen, vorzugsweise aus Keramik bestehenden Kondensator 22 ein RC-Filter bildet, Spannungsschwankungen vom Ausgang der Spannungsversorgungseinheit 10 auf ein Maß vermindert, gegenüber dem die Sensoreinheit 14 ausreichend unempfindlich ist.

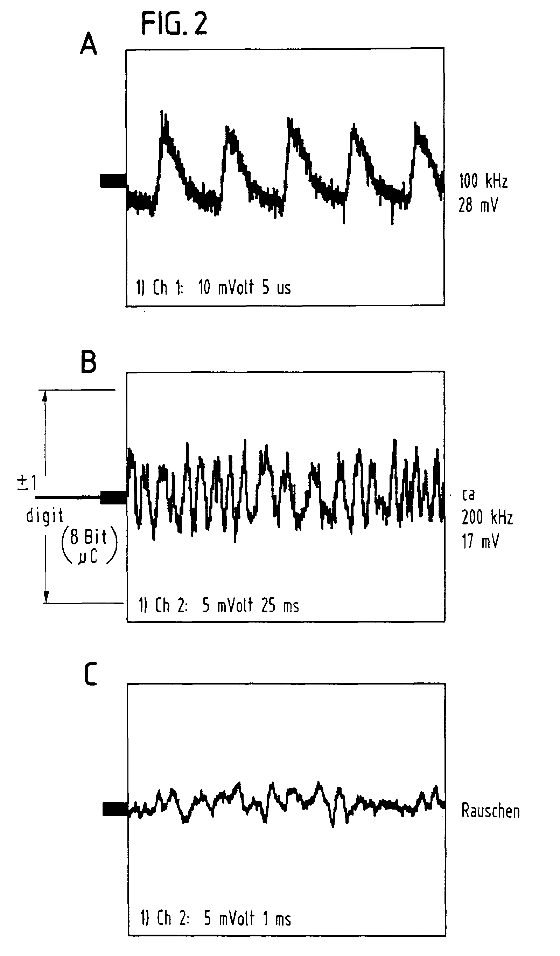

In Figur 2 sind Signalverläufe angegeben, wie sie ohne jede Filterung gemessen werden. Die Abszisse gibt jeweils die Zeit an, die Ordinate die Spannungsschwankung. Die Einschriften in den Kästchen geben die Messgeräteinstellung an.

Das Diagramm A zeigt periodische Spannungsschwankungen am Ausgang 16 der Spannungsversorgungseinheit 10, die im dargestellten Beispiel eine Amplitude von 28 mV und eine Frequenz von 100 kHz haben.

Das Diagramm B zeigt den Spannungsverlauf am Ausgang (30 (Fig. 1) der Sensoreinheit 14 bei einer Frequenz von etwa 200 kHz, das heißt bei einer Überlagerung etwa der zweiten Harmonischen der Schaltfrequenz der Spannungsversorgungseinheit 10 und der dritten Harmonischen der Schaltfrequenz der Sensoreinheit 14 für den Fall, dass kein Filter vorhanden ist. Die Amplitude beträgt etwa 17 mV. Links vom Diagramm B ist die Amplitude der Spannungsschwankungen, bei denen ein erzeugtes Beschleunigungssignal um weniger als +/- 1 digit verfälscht wird, angegeben.

Das Diagramm C gibt ein Rauschen am Sensorausgang 30 ohne Filter an, und zwar in einem Frequenzbereich, in dem sich keine Harmonischen treffen bzw. überlagern. Wie ersichtlich, ist die dort vorherrschende Amplitude unkritisch.

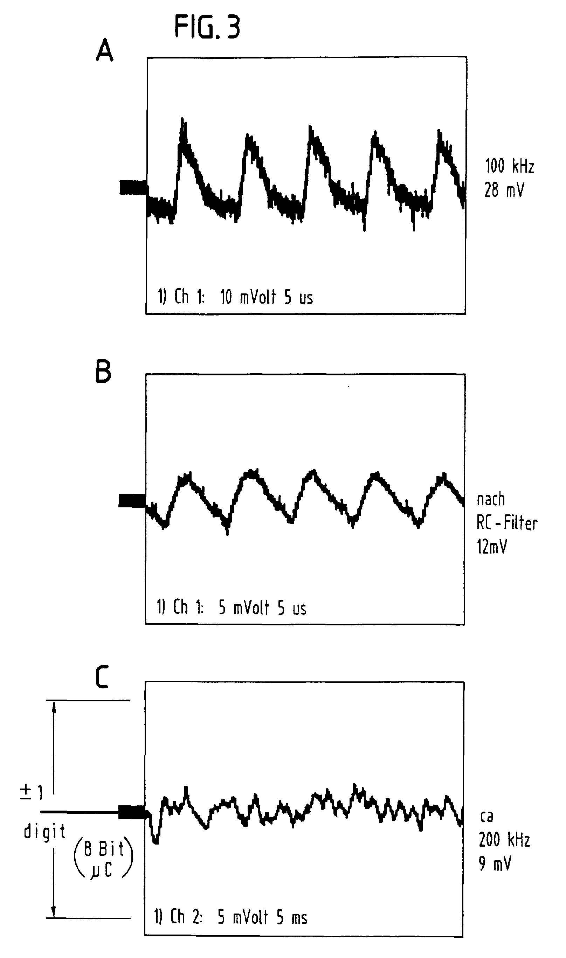

Figur 3 stellt den Fall dar, bei dem als Filter der Widerstand 28 in Kombination mit dem Kondensator 22 gemäß Figur 1 vorgesehen ist. Das Diagramm A ist gleich dem Diagramm A der Fig. 2. Der Signalabgriff der Ausgangsspannung der Spannungsversorgungseinheit 10 ist vor dem Widerstand 28. Das Diagramm B gibt die Amplitude des Signals am Stromversorgungseingang 20 der Sensoreinheit 14 an. Wie ersichtlich, ist die Spannungsschwankung gegenüber dem Signalverlauf gemäß A deutlich verkleinert, so dass die Störungssicherheit vergrößert ist.

Das Diagramm C gibt den Signalverlauf am Ausgang 30 der Sensoreinheit 14 bei einer Frequenz von etwa 200 kHz an und entspricht somit dem Diagramm B der Fig. 2. Wie ersichtlich, ist die Störung am Sensorausgang kleiner als +/- 0,5 digit und entspricht annähernd dem Rauschen der Fig. 2 C.

Wie aus dem Vorstehenden ersichtlich, wird mit dem erfindungsgemäß vorgesehenen RC-Filter (22, 28) eine Spannungsversorgung erzielt, die bei kostengünstigem Aufbau ein hohes Maß an Fehlersicherheit gewährleistet.

Figur 4 zeigt eine Weiterbildung der Anordnung der Fig. 1, bei der zwei parallel geschaltete Sensoreinheiten 14, 32 von der Spannungsversorgungseinheit 10 gemeinsam versorgt werden. Die Sensoreinheit 32 weist, ähnlich wie die Sensoreinheit 14, aus Gründen der elektromagnetischen Verträglichkeit einen parallel zu ihrem Eingang geschalteten Kondensator 34 auf. Der Widerstand 28 bildet mit den Kondensatoren 22 und 34 zusammen ein RC-Filter. Die Größe des Widerstands 28 ist im Fall der Figur 4 vorzugsweise halb so groß wie im Fall der Figur 1, d.h. der Widerstand 28 der Figur 4 beträgt beispielsweise etwa 5 Ohm.

Je nach erforderlicher Stärke der Filterung können größere oder kleinere Widerstände verwendet werden. Auch die Kapazität der Keramikkondensatoren 22 bzw. 34 kann erforderlichenfalls vergrößert werden, wobei es aus Kostengründen vorteilhaft sein kann, anstelle eines großen Kondensators mehrere, parallel geschaltete kleine Kondensatoren zu verwenden.

Fig. 5 zeigt eine weitere Ausführungsform der Schaltung, die gegenüber der Ausführungsform gemäß Fig. 4 dadurch ergänzt ist, dass parallel zu den Sensoreinheiten 14 und 32 ein Mikrocontroller 36 hinter dem Widerstand 28 an der Leitung 12 liegt. Der Mikrocontroller 36 weist einen Referenzspannungseingang 38 auf, der von der Spannungsversorgungseinheit 10 mit gefilterter bzw. geglätteter Spannung versorgt wird. Die Filterung geschieht mittels des Widerstandes 28 und der Parallelschaltung der Kondensatoren 22, 34 und 40, wobei der Kondensator 40 parallel zum Referenzspannungseingang 38 liegt.

Der Mikrocontroller 36 enthält einen A/D-Wandler 42, dem im dargestellten Beispiel das analoge Ausgangssignal der Sensoreinheit 32 zugeführt wird, um als digitales Ausgangssignal für die weitere Verarbeitung zur Verfügung zu stehen. In der Zeichnung nicht dargestellt ist eine Ausgangsleitung der Sensoreinheit 14, deren Ausgangssignal vom Mikrocontroller ebenso analog/digital gewandelt werden kann.

Es versteht sich, daß auch andere Arten von Mikrocontrollern vorgesehen sein können.

Vorteilhafterweise sind die Kondensatoren 22, 34 und 40, die zusammen mit dem Widerstand 28 zur Filterung dienen, möglichst nahe an den jeweiligen Eingängen der Einheiten 14, 32 und 36 angeordnet, wodurch sich ihre Wirksamkeit bezüglich der Verbesserung der elektromagnetischen Verträglichkeit erhöht. Wenn diese räumliche Nähe aus EMU-Gründen nicht zwingend erforderlich ist, muß nicht jede Sensoreinheit bzw. jeder Mikrocontroller einen eigenen Kondensator aufweisen.

## Patentansprüche

1. Spannungsversorgung für eine Sensoreinheit, insbesondere eine Beschleunigungssensoreinheit in einem Insassenschutzsystem eines Kraftfahrzeugs, enthaltend
eine mit einer internen Schaltfrequenz arbeitende Spannungsversorgungseinheit (10) mit einem parallel zum Ausgang geschalteten Kondensator (18),
eine mit einer internen Schaltfrequenz arbeitende Sensoreinheit (14; 32) mit wenigstens einem parallel zum Stromversorgungseingang (20) geschalteten Kondensator (22; 34),
einer den Ausgang der Spannungsversorgungseinheit mit dem Stromversorgungseingang der Sensoreinheit verbindenden Leitung (12) und
einem Filter mit einem zwischen den Abzweigpunkten der Kondensatoren (18; 22, 34) in der Leitung enthaltenen Filterbauteil
**dadurch gekennzeichnet, dass**
das Filterbauteil durch einen Widerstand (28) gebildet ist, der zusammen mit dem parallel zum Stromversorgungseingang (20) der Sensoreinheit (14; 32) geschalteten Kondensator (22, 34) das Filter bildet.

2. Spannungsversorgung nach Anspruch 1, **dadurch gekennzeichnet, dass** an der Leitung (12) parallel mehrere Sensoreinheiten (14, 32) liegen.

3. Spannungsversorgung nach Anspruch 2, **dadurch gekennzeichnet, daß** der einen Teil des Filters bildende Widerstand (28) allen Sensoreinheiten (14, 32) gemeinsam ist.

4. Spannungsversorgung nach einem der Ansprüche 1 bis 3,
**dadurch gekennzeichnet, daß** der parallel zum Stromversorgungseingang (20) der Sensoreinheit liegende Kondensator (22, 34) ein keramischer Kondensator ist.

5. Spannungsversorgung nach einem der Ansprüche 1 bis 4,
**dadurch gekennzeichnet, daß** der parallel zur Stromversorgung der Sensoreinheit liegende Kondensator (22, 34) räumlich nahe am Stromversorgungseingang angeordnet ist.

6. Spannungsversorgung nach einem der Ansprüche 1 bis 5,
**dadurch gekennzeichnet, dass** an der Leitung (12) parallel zu der Sensoreinheit (14, 32) ein Mikrocontroller (36) mit einem an die Leitung (12) angeschlossenen Referenzspannungseingang (38) liegt.

7. Spannungsversorgung nach Anspruch 6, **dadurch gekennzeichnet, daß** der Mikrocontroller (36) einen A/D-Wandler (42) zum Wandeln analoger Ausgangssignale der Sensoreinheit (14, 32)in digitale Ausgangssignale enthält.
